# EUROPÄISCHE PATENTANMELDUNG

(11) **EP 1 997 649 A1**
(43) Veröffentlichungstag der Anmeldung: **03.12.2008**
(21) Anmeldenummer: 08152348.2
(22) Anmeldetag: 06.03.2008
(51) Int. Cl.: B60C 9/00

(54) **Festigkeitsträgerlage aus Hybridkorden für elastomere Erzeugnisse, insbesondere für die Gürtelbandage von Fahrzeugluftreifen**

(30) Priorität: 31.05.2007 DE 102007025489
(71) Anmelder: Continental Aktiengesellschaft, 30165 Hannover (DE)
(72) Erfinder: Van Barneveld, Claus, 30827, Garbsen (DE); Justine, Carole, 31515 Wunstorf (DE); Wahl, Günter, 31249, Hohenhameln-Clauen (DE)
(74) Vertreter: Finger, Karsten

(57) **Zusammenfassung**

Die Erfindung betrifft eine Festigkeitsträgerlage für elastomere Erzeugnisse, insbesondere für die Gürtelbandage von Fahrzeugluftreifen, wobei die Festigkeitsträger Hybridkorde sind und aus einer ersten Komponente aus einem ersten verdrehten Filament-Garn oder einem daraus gebildeten Kord aus einem ersten Material und aus einer zweiten Komponente aus einem zweiten verdrehten Garn oder Kord aus einem zweiten Material, die miteinander endverdreht sind, aufgebaut sind, wobei das erste Material ein nicht-metallisches Polymer und das zweite Material ein Multifil-Garn oder daraus hergestellter Kord aus Glasfaser sind.

## Beschreibung

Die Erfindung betrifft eine Festigkeitsträgerlage für elastomere Erzeugnisse, insbesondere für die Gürtelbandage von Fahrzeugluftreifen, wobei die Festigkeitsträger Hybridkorde sind, welche innerhalb der Lage im Wesentlichen parallel zueinander angeordnet sind und aus einer ersten Komponente aus einem ersten verdrehten Filament-Garn oder einem daraus gebildeten Kord aus einem ersten Material und aus einer zweiten Komponente aus einem zweiten verdrehten Garn oder Kord aus einem zweiten Material, die miteinander endverdreht sind, aufgebaut sind, wobei das erste Material ein nicht-metallisches Polymer ist. Ferner betrifft die Erfindung einen Fahrzeugluftreifen, enthaltend eine Gürtelbandage und/oder einen Wulstverstärker aus einer solchen Festigkeitsträgerlage.

Um bei Fahrzeugluftreifen, insbesondere im Hochgeschwindigkeitseinsatz, eine Erhebung des Reifens durch die im Fahrbetrieb auftretenden Fliehkräfte zu verhindern, ist es bekannt, bei einem Fahrzeugluftreifen eine Gürtelbandage vorzusehen. Ein Fahrzeugluftreifen, beispielsweise radialer Bauart, weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelränder ab. Die Gürtelbandage enthält üblicherweise parallele und im Wesentlichen in Umfangsrichtung verlaufende Festigkeitsträger in Form von Korden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und bei der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird.

Die Korde der Bandage sollen bei der Reifenherstellung eine ausreichende Erhebung bei der Bombage und in der Vulkanisationsform zulassen, damit der Reifen präzise ausgeformt werden kann, zudem sollen sie nach der Fertigstellung des Reifens im Fahrbetrieb eine gute Hochgeschwindigkeitstauglichkeit gewährleisten. Um diesen Anforderungen zu genügen, sollten sich die Korde bis zu einer Dehnung von ca. 4 % mit mäßigem Kraftaufwand und ab einer höheren Dehnung nur noch mit sehr hohem Kraftaufwand dehnen lassen.

Eine Hybridkorde aufweisende Festigkeitsträgerlage, insbesondere als Gürtelbandage für Fahrzeugreifen eingesetzt, ist aus der EP 1 475 248 A1 bekannt geworden. Die Hybridkorde bestehen aus zwei verdrehten Garnen, wobei ein Garn des Kordes ein Aramidgarn und das zweite Garn ein Nylongarn ist. Die vorgenannte Festigkeitsträgerlage verleiht dem Reifen eine gute Hochgeschwindigkeitstauglichkeit und eine ausreichende Dehnung während der Reifenherstellung. Jedoch ist dieser Festigkeitsträger durch die Verwendung von Aramidgarn teuer und verteuert somit den gesamten Reifen.

Der vorliegenden Erfindung liegt die Aufgabe zu Grunde, eine alternative Festigkeitsträgerlage aus gummierten Hybridkorden für elastomere Erzeugnisse, insbesondere für die Gürtelbandage von Fahrzeugluftreifen bereitzustellen, welche jedoch kostengünstig ist. Die Festigkeitsträger der Festigkeitsträgerlage sollen sich durch ein Kraft-Dehnungs-Verhalten auszeichnen, das bei Verwendung der Festigkeitsträgerlage, insbesondere als Gürtelbandage, dem Fahrzeugluftreifen eine große Hochgeschwindigkeitstauglichkeit verleiht, aber eine Erhebung während der Bombage und der Vulkanisation des Reifenrohlings erlaubt.

Die Aufgabe wird gelöst, indem das zweite Material ein Multifil-Garn oder -Kord aus Glasfaser ist.

Erfindungswesentlich ist, dass überraschender Weise trotz der Verwendung von einem Glasfaser-Multifil-Garn oder einem aus dem Garn gebildeten Kord, die erwünschten Eigenschaften des Hybridkordes, insbesondere im Einsatz als Gürtelbandage in einem Fahrzeugluftreifen erhaltbar sind. Glasfaser ist als Material preiswerter als Aramid, so dass gegenüber dem Kord des Standes der Technik, welcher aus Aramid/Nylon aufgebaut ist, ein Kostenvorteil erzielbar ist. Glasfaser hat einen ähnlich hohen Modul wie Aramid und ist höchst beständig. Bisher war es problematisch, Glasfaser an Gummi anzubinden. Daher hat die Fachwelt Glasfaser in Elastomerprodukten nicht als Festigkeitsträger, insbesondere in der Gürtelbandage, eingesetzt. Diese Erfindung wendet sich vom bisherigen Kenntnisstand der Fachwelt ab und setzt Glasfaser als ein Material des aus zwei Materialien bestehenden Hybridkordes ein. Somit ist eine alternative Festigkeitsträgerlage mit sehr ähnlichen Eigenschaften zu einer Festigkeitsträgerlage mit Aramid/Nylon-Hybridkordfestigkeitsträgem geschaffen, die jedoch kostengünstiger ist. Die vorteilhaften Eigenschaften des Aramids, den hohen Elastizitätsmodul, das Nicht-Schrumpfen und die geringe plastische Verformung werden alternativ von der Glasfaser erfüllt. Die erfindungsgemäße Festigkeitsträgerlage erlaubt eine ausreichende Dehnung während des Reifenherstellungsschrittes der Bombage und der Vulkanisation, so dass der Reifenrohling präzise ausformbar ist. Nur das Glasfasergarn des Hybridcordes hat tragende Eigenschaften, während das nicht-metallische Polymer-Garn quasi als Füllstoff dient und die ausreichende Erhebung während der Bombage und der Vulkanisation ermöglicht. Das Glasfaser-Garn und das nicht-metallische Polymer-Garn sind vertwistet, so dass das Glasfaser-Garn helixförmig im Kord angeordnet ist und eine federähnliche Wirkung erreicht, welche die Erhebung der erfindungsgemäßen Festigkeitsträgerlage erlaubt. Zudem ist der Reifen gut hochgeschwindigkeitstauglich. Der Hybridkord ist vergleichsweise preiswert in der Anschaffung, weil Glasfaser in der Anschaffung günstig zu erhalten ist. Der Reifen weist eine hohe Umfangssteifigkeit auf, welche die guten Hochgeschwindigkeitseigenschaften bewirken. Es ist zudem eine präzise Ausformung während der Reifenherstellung ermöglicht, wodurch der Reifen eine gute Uniformity aufweist.

In vorteilhaften Ausgestaltungen weisen beiden Komponenten des Hybridkordes je einen Titer von 250 - 5000 dtex auf. Der Titer der einzelnen Garne, die die jeweiligen Komponenten des Hybridkordes bilden, liegt im Bereich zwischen 340 - 2200 dtex, vorzugsweise bis 1670 dtex auf. Somit ist der Festigkeitsträger für die Festigkeitsträgerlage relativ fein, wodurch an Gewicht des diese Festigkeitsträgerlage aufweisenden Elastomerproduktes eingespart ist. In Reifenanwendungen wird der Rollwiderstand des Reifens positiv durch die Gewichtseinsparung beeinflusst.

Der Unterschied in den Feinheiten zwischen beiden verschiedenen Garnen bzw. Korden des Hybridkordes sollte möglichst gering gewählt werden, um einen möglichst gleichmäßigen / symmetrischen Kord zu erhalten. Dieser lässt sich gut verarbeiten und weist eine gute Restfestigkeit nach Ermüdung auf. Vorteilhaft ist es, wenn beide den Hybridkord bildenden Garne oder Korde eine sehr ähnliche Feinheit aufweisen.

Vorteilhaft ist es, wenn die beiden, den Hybridcord bildenden Garne mit einer Drehungszahl von 300-480 t/m endverdreht sind. Eine zu hohe Drehungszahl verlängert den Herstellungsprozess, erfordert mehr Materialeinsatz und steigert die Kosten. Bei einer zu geringen Drehungszahl verliert der Cord seine federähnliche Wirkung und eine ausreichende Erhebung des Reifenrohlings wäre nicht gewährleistbar.

Das Material der ersten Komponente des Hybridkordes kann besonders bevorzugt ein Polyamid sein. Es kommen aber ebenfalls Polyester oder Rayon oder Aramid als erste Materialkomponente in Betracht, welche dann mit Glasfaser gemeinsam den Hybridkord bilden.

Ein Hybridkord aus Polyamid, vorzugsweise PA66, und Glasfaser erreicht in etwa die mechanischen Eigenschaften des Kordes des Standes der Technik, ist aber kostengünstiger zu erhalten und die Haftchemie an Gummi ist einfacher.
Gegenüber dem vorbeschriebenen Hybridkord besteht ein weiterer alternativer Hybridkord aus Polyester und Glasfaser. Polyester (PEN und PET) hat gegenüber PA66 den Vorteil, dass Polyester einen geringeren Schrumpf aufweist und somit das Flatspotting reduzierbar ist. Ein Preisvorteil gegenüber dem Kord des Standes der Technik wird ebenfalls durch den Verzicht auf Aramid erzielt. Jedoch ist die Haftchemie schwieriger.

Ein weiterer alternativer Hybridkord besteht aus Rayon und Glasfaser. Durch den Einsatz von Rayon ist kein ganz so großer Kostenvorteil wie durch den Einsatz von Polyamid oder Polyester erzielbar. Jedoch ist der Schrumpf ebenfalls gering, wodurch das Flatspotting reduzierbar und eine gute Gummianhaftung erreichbar ist.

In einer weiteren Ausführungsform besteht der Hybridkord, welche gummiert die Festigkeitsträgerlage bilden, aus Aramid und Glasfaser.

Besonders vorteilhaft ist es, wenn die Glasfaserfilamente mit RFL (Resorcin Formaldehyd Latex) gummifreundlich ausgerüstet sind. Wenn diese Behandlung bereits an den Filamenten vorgenommen worden ist, welche anschließend zum Hybridkord verarbeitet werden, kann eine nachträgliche Behandlung des gesamten Kordes zur besseren Gummianbindung entfallen. Eine ausreichende Gummianbindung ist bereits dann zu erhalten, wenn nur die Glasfaserfilamente gummifreundlich ausgerüstet sind. Aufwendige nachträgliche Behandlungen des Kordes können entfallen.

In einer besonders bevorzugten Ausführungsform weist der Hybridkord die Konstruktion PA66 1400x1 und Glasfaser 1100x2 auf. In einer anderen Ausführungsform kann der Hybridkord aus beispielsweise einem PA66-Garn mit einem Titer von 940dtex und einem Glasfaser-Garn mit einem Titer von 1100dtex in Einfachkonstruktion bestehen.

Verwendet man wenigstens eine der vorbeschriebenen Festigkeitsträgerlage in einem Fahrzeugluftreifen, vorzugsweise als Gürtelbandage, so weist der Reifen eine besonders gute Hochgeschwindigkeitstauglichkeit auf und die Herstellungskosten des Reifens sowie sein Gewicht sind reduziert.

Beim Einsatz der vorbeschriebenen Festigkeitsträgerlage als Wulstverstärker in einem Fahrzeugluftreifen liegt der Vorteil darin, dass der Hybridfestigkeitsträger gegenüber üblicherweise eingesetzten Festigkeitsträgern eine verbesserte Haftung zum Gummi in Kombination mit besserem Flatspot-Verhalten aufweist. Gegenüber bekannten Aramidfestigkeitsträgern, welche im Wulstverstärker ebenfalls Verwendung finden, sind insbesondere in Bezug auf die Materialkosten und Haftung Vorteile erzielt.

Die Glasfasergarne, welche im Hybridkord verwendet werden, sind in ihrem Verhalten mit textilen Festigkeitsträgern vergleichbar und verhalten sich nicht spröde.

Zwei bevorzugte Ausführungsformen der in der Festigkeitsträgerlage angeordneten Festigkeitsträger werden nachfolgend beschrieben:
In einer besonders bevorzugten Ausführungsform weist der Hybridkord die Konstruktion PA66 1400x1 und Glasfaser 1100x2 auf. Das PA66-Garn ist S/Z mit 370 T/m verdreht. Jedes der zwei Glasfaser-Multifilament-Garne ist S/Z mit 140 T/m erstverdreht und S/Z mit 140 T/m gemeinsam miteinander verdreht. Der Hybridkord ist S/Z mit 370 T/m endverdreht. Die Glasfaserfilamente sind vorab gummifreundlich (RFL) behandelt, so dass eine besondere Behandlung des gesamten Kordes zur verbesserten Haftung nicht notwendig ist. Die Haftung ist durch das RFL-Coating der Glasfaserfilamente in Kombination mit einem auf die Bedürfnisse des PA66 angepassten Kord-Dips erreicht. Dieses Coating erhöht zugleich die Ermüdungsbeständigkeit der Glasfasergarne/ -Korde. Die vorbeschriebene Festigkeitsträgerkonstruktion ist alternativ zu einer 1670x1 +1400x1 Aramid/Nylon-Hybridkordkonstruktion einsetzbar. Die mechanischen Eigenschaften beider Korde sind sehr ähnlich, jedoch ist der PA66/Glasfaser-Hybridkord wesentlich kostengünstiger erhaltbar und die Haftchemie ist einfacher, so dass eine bessere Gummianbindung mit weniger Auffand erreichbar ist.

In einer anderen Ausführungsform kann der Hybridkord aus beispielsweise einem PA66-Garn mit einem Titer von 940dtex und einem Glasfaser-Garn mit einem Titer von 1100dtex in Einfachkonstruktion bestehen und die Glasfaserfilamente können gummifreundlich ausgerüstet sein.

Die Angabe beider Drehrichtungen "S/Z" gibt die dem Fachmann bekannte Möglichkeit der Drehrichtungen der Garne bzw. Korde in S- oder in Z-Richtung an.

In der vorliegenden Beschreibung meint "Multifilament-Garn" ein Garn, welches aus feinsten Endlosfäden (Filamenten) besteht und kein Monofil (aus nur einem einzigen Filament aufgebaut) ist. Der Begriff "Filament-Garn" beschreibt ebenfalls ein Garn aus Endlosfäden. Der Begriff "Garn" ist nach DIN 60900 ein Sammelbegriff für alle linienförmigen textilen Gebilde. Danach ist ein Garn sinngemäß ein langes, dünnes Gebilde aus einem oder mehreren Filamenten, welche ebenfalls verdreht sein können.

## Patentansprüche

1. Festigkeitsträgerlage für elastomere Erzeugnisse, insbesondere für die Gürtelbandage von Fahrzeugluftreifen, wobei die Festigkeitsträger Hybridkorde sind, welche innerhalb der Lage im Wesentlichen parallel zueinander angeordnet sind und aus einer ersten Komponente aus einem ersten verdrehten Filament-Garn oder einem daraus gebildeten Kord aus einem ersten Material und aus einer zweiten Komponente aus einem zweiten verdrehten Garn oder Kord aus einem zweiten Material, die miteinander endverdreht sind, aufgebaut sind, wobei das erste Material ein nicht-metallisches Polymer ist,
**dadurch gekennzeichnet, dass** das zweite Material ein Multifil-Garn oder -Kord aus Glasfaser ist.

2. Festigkeitsträgerlage nach Anspruch 1,
**dadurch gekennzeichnet, dass** die beiden Komponenten des Hybridkordes einen Titer von 250 - 5000 dtex und dass die einzelnen Garne einen Titer zwischen 340 - 2200 dtex aufweisen.

3. Festigkeitsträgerlage nach zumindest einem der vorangehenden Ansprüche,
**dadurch gekennzeichnet, dass** beide Komponenten des Hybridkordes in etwa gleiche Titer aufweisen.

4. Festigkeitsträgerlage nach zumindest einem der vorangehenden Ansprüche,
**dadurch gekennzeichnet, dass** beide Garne oder Korde des Hybridkordes mit 300-480 t/m endverdreht sind.

5. Festigkeitsträgerlage nach zumindest einem der vorangehenden Ansprüche,
**dadurch gekennzeichnet, dass** das Material der ersten Komponente des Hybridkordes ein Polyamid, Polyester, Rayon oder Aramid ist.

6. Festigkeitsträgerlage nach Anspruch 5,
**dadurch gekennzeichnet, dass** die Glasfaserfilamente RFL - behandelt sind.

7. Festigkeitsträgerlage nach zumindest einem der vorangehenden Ansprüche,
**dadurch gekennzeichnet, dass** die erste Komponente des Hybridkordes ein PA66-Garn mit einem Titer von 940dtex ist und die zweite Komponente ein Glasfaser-Garn mit einem Titer von 1100dtex ist.

8. Festigkeitsträgerlage nach einem der Ansprüche 1-6,
**dadurch gekennzeichnet, dass** der Hybridkord die Konstruktion PA66 1400x1 und Glasfaser 1100x2 aufweist.

9. Fahrzeugluftreifen, enthaltend zumindest eine Festigkeitsträgerlage gemäß zumindest einem der Ansprüche 1 bis 8.

10. Fahrzeugluftreifen nach Anspruch 9,
**dadurch gekennzeichnet, dass** die Festigkeitsträgerlage als Gürtelbandage und/oder als Wulstverstärker angeordnet ist.
